Europäisches Patentamt

European Patent Office

Office européen des brevets

(11) Veröffentlichungsnummer: **0 089 025**
**B1**

# (12) EUROPÄISCHE PATENTSCHRIFT

(45) Veröffentlichungstag der Patentschrift:
**21.08.85**

(21) Anmeldenummer: **83102411.2**

(22) Anmeldetag: **11.03.83**

(51) Int. Cl.⁴: **A 23 L 3/16**, A 47 J 39/00,
F 24 C 15/32

(54) **Vorrichtung zur Wärmebehandlung von Nahrungsmitteln mittels eines Dampf-Luft-Gemisches.**

(30) Priorität: **11.03.82 DE 3208874**

(43) Veröffentlichungstag der Anmeldung:
**21.09.83 Patentblatt 83/38**

(45) Bekanntmachung des Hinweises auf die Patenterteilung:
**21.08.85 Patentblatt 85/34**

(84) Benannte Vertragsstaaten:
**AT CH FR GB IT LI NL SE**

(56) Entgegenhaltungen:
**EP - A - 0 002 484**
**DE - A - 2 842 771**
**DE - B - 2 731 191**

(73) Patentinhaber: **Convotherm-Elektrogeräte GmbH,
Königsdorfer Strasse 28, D-8190 Wolfratshausen (DE)**

(72) Erfinder: **Rottenfusser, Josef, Dipl.-Ing., Fasanenweg 5,
D-8056 Grüneck (DE)**
Erfinder: **Schwarzbäcker, Werner, Dipl.-Ing.,
Königsdorfer Strasse 28, D-8190 Wolfratshausen (DE)**

(74) Vertreter: **Zmyj, Erwin, Dipl.-Ing., Postfach 95 04 28,
D-8000 München 95 (DE)**

## Beschreibung

Die Erfindung bezieht sich auf eine Vorrichtung zur Wärmebehandlung von Nahrungsmitteln mittels eines bei atmosphärischem Druck durch ein Gebläse in einem Garraum eines Gehäuses umgewälzten Dampf-Luft-Gemisches als Wärmeträger, wobei in den Garraum ein Dampfeinlaß einmündet und das Gehäuse außer dem Gebläse und einem dazugehörigen Motor eine Heizvorrichtung für den Wärmeträger, einen Wrasenabzug, einen Dampferzeuger mit Wasserzulauf, Wasserablauf und steuerbarer Heizung sowie elektrische bzw. elektronische Steuerelemente für alle mit dem Betrieb der Vorrichtung zusammenhängenden steuerbaren Einflußgrößen aufweist.

Bei einer bekannten Vorrichtung dieser Art (DE-B-2 731 191) ist der Dampferzeuger an der Seite des Gerätes angeordnet, an der sich auch der Motor für das Gebläse und sämtliche Steuerelemente befinden. Der Wasserablauf des Dampferzeugers, der sich notwendigerweise an der tiefesten Stelle des Dampferzeugers befinden muß, ist so tief angeordnet, daß ein Ablassen des Wassers aus dem Dampferzeuger über eine aus dem Gerät nach außen führende separate Leitung erfolgen muß. Das Ablassen von Wasser aus dem Dampferzeuger ist von Zeit zu Zeit notwendig, um den Dampferzeuger zu entschlammen und ihn von Rückständen, insbesondere Kalkrückständen zu befreien. Die über eine separate Leitung erfolgende Entleerung ist immer dann umständlich und zeitraubend, wenn diese Leitung an der Rückseite des Gerätes, also an einer schlecht zugänglichen Stelle vorgesehen ist, wobei entweder nach Öffnen eines Verschlusses das Wasser in einen Kübel oder in eine Abwasserleitung abgelassen wird. Wegen dieser umständlichen Handhabung und der schlechten Zugänglichkeit kann man davon ausgehen, daß die Reinigung des Dampferzeugers häufig unterbleibt, wodurch sich feinkörnige und schuppenförmige Ablagerungen festsetzen, die im Laufe der Zeit eine feste Kruste bilden und nur mit scharfen Reinigungsmitteln entfernt werden können. Eine solche Reinigung ist aufgrund der notwendigerweise einzusetzenden scharfen Reinigungsmittel nur mit besonderen Vorsichtsmaßnahmen durchzuführen, wenn die ausführende Person nicht beeinträchtigt werden soll. Dies alles führt dazu, daß der Reinigungsvorgang so lang wie möglich aufgeschoben wird, was zur Folge hat, daß die Leistung des Dampferzeugers abfällt. Eine weitere damit verbundene Beeinträchtigung des Betriebs dieser Vorrichtung besteht darin, daß Ablagerungen aus dem Dampferzeuger ausgeworfen und in den Garraum des Gerätes gelangen können, was nicht nur zu einer Verschmutzung des Gargutes führt, sondern aus ernährungsphysiologischen Gründen abzulehnen ist.

Aufgabe der Erfindung ist es unter Vermeidung der oben angeführten Nachteile eine Vorrichtung der eingangs erläuterten Art so auszu gestalten, daß bei vereinfachter baulicher Ausgestaltung eine einfache Reinigung sowie eine einfache Ablaßmöglichkeit des Inhalts aus dem Dampferzeuger ermöglicht wird.

Diese Aufgabe wird ausgehend von einer Vorrichtung der eingangs erläuterten Art erfindungsgemäß dadurch gelöst, daß der Wasserablauf des Dampferzeugers in den Garraum über dessen Boden einmündet.

Durch diese grundsätzliche Ausgestaltung, den Wasserablauf in den Garraum einmünden zu lassen, werden zahlreiche Vorteile erzielt. Ein wesentlicher Vorteil besteht darin, daß der bauliche Aufwand verringert ist, da eine zusätzliche Abwasserleitung nicht erforderlich ist. Bei einem Ablassen des Dampferzeugers gelangt also das abgelassene Wasser in den bauseits ohnehin für den Betrieb dieses Gerätes notwendige Abwasserleitung, an die das Gerät ohnehin angeschlossen ist. Es entfällt also eine zusätzliche Abwasserleitung. Der wesentliche Vorteil, aus dem sich zahlreiche weitere Vorteile ableiten lassen, besteht in der leichten Zugänglichkeit des Wasserablaufstutzens und seines Verschlußorganes.

Wegen dieser leichten Zugänglichkeit kann mit hoher Wahrscheinlichkeit angenommen werden, daß der Dampferzeuger öfters abgelassen und durchgespült wird, wodurch die anfallenden feinkörnigen und schuppenförmigen Ablagerungen aus dem Dampferzeuger herausgespült werden, bevor sie eine feste Kruste bilden. Wenn die festen Ablagerungen durch häufiges Durchspülen des Dampferzeugers vermieden werden können, so wird hierdurch ein Entkalken mittels aggressiver Reinigungsflüssigkeiten vermieden, was die Betriebssicherheit wesentlich erhöht. Bei Fehlen solcher Ablagerungen im Dampferzeuger wird auch das Ausschleudern von Teilen dieser Rückstände in den Garraum vermieden und damit gewährleistet, daß eine Verunreinigung des Gargutes unterbleibt. Da die Ablagerungen im Inneren des Dampferzeugers, die sich auch an den Heizstäben niederschlagen, die Heizleistung und damit die Leistungsfähigkeit des Dampferzeugers vermindern, wird durch die häufige und leichte Reinigung aufgrund der Ausgestaltung gemäß der Erfindung die Leistungsfähigkeit des Dampferzeugers erhöht und eine Energieverschwendung vermieden. Da diese Ablagerungen aufgrund der leichten Reinigungsmöglichkeit vermieden werden kann, ist der Betrieb des Gerätes praktisch unabhängig von der Wasserqualität, insbesondere des Härtegrades des Wassers, weil bei wesentlich härterem Wasser der Verschlammung und Verkalkung durch häufigeres Reinigen begegnet werden kann, was aufgrund der leichten Zugänglichkeit innerhalb des Gerätes keinerlei Schwierigkeiten bereitet. Diese leichte Zugänglichkeit und das Fehlen von Risiken, weil aggressive Lösungsmittel nicht anzuwenden sind, führt auch dazu, daß für die Reinigung der Dampferzeuger kein Fachpersonal benötigt wird. Da aufwendige Entkalkungsarbeiten und damit Betriebsunterbrechungen entfallen, ist die Betriebsbereitschaft des Gerätes aus dieser Sicht nicht beeinträchtigt. Wesentlich in diesem Zusammenhang ist der Vorteil, daß wegen Fehlens von Ablagerungen diese auch nicht in den Garraum gelangen können, so daß die Qualität des hergestellten Erzeugnisses stets gleichbleibend ist.

Eine bevorzugte Ausgestaltung der Erfindung besteht darin, daß der Motor mit Gebläse zusammen mit den Steuerelementen an einer Gehäuseseite und der Dampferzeuger an einer anderen Gehäuseseite in solcher Höhe angeordnet ist, daß der Wasserablauf in den Garraum oberhalb dessen Boden einführbar ist.

Durch die Trennung des Dampferzeugers von den anderen Aggregaten, d. h. durch die Anordnung des Dampferzeugers an einer Geräteseite, an der sich keine Steuerelemente und auch kein Motor befindet, ist genügend Platz vorhanden, um den Dampferzeuger in der notwendigen Höhe anordnen zu können, damit der Wasserablauf in den Garraum eingeführt werden kann.

Eine weitere vorteilhafte Ausgestaltung der Erfindung ergibt sich dadurch, daß der Wasserablauf und Dampfeinlaß als Rohrstutzen mit Außengewinde ausgebildet und an einer Seite des Dampferzeugers angeordnet sind und daß der Wasserablaufstutzen und der Dampfeinlaßstutzen durch eine Begrenzungswand des Garraumes hindurchgeführt und an dieser Wand lösbar befestigt sind. Wenn in Verbindung mit dieser Ausgestaltung der Wasserablaufstutzen und der Dampfeinlaßstutzen an verschiedenen Seiten der vertikalen Hauptachse des Dampferzeugers angeordnet sind, so ergibt sich eine spannungsfreie einfache Anordnung, bei der keine zusätzlichen Befestigungselemente notwendig sind. Diese Ausgestaltung bringt auch noch den entscheidenden Vorteil mit sich, daß bei entsprechend groß gewähltem Querschnitt des Wasserablaufstutzens der untere Bereich des Dampferzeugers eingesehen werden kann, wodurch in einfacher Weise feststellbar ist, ob sich Ablagerungen bilden oder nicht.

Diese Beobachtungsmöglichkeit wird noch verbessert, wenn gemäß einer vorteilhaften Ausgestaltung der Erfindung sämtliche Wand- bzw. Bodenteile des Dampferzeugers mit Ausnahme der den Wasserablaufstutzen tragenden Wand zumindest in der Nähe des Wasserablaufstutzens in Richtung auf diesen hin geneigt sind. Es entsteht dadurch eine Bodenmulde, an deren tiefstem Punkt der Wasserablaufstutzen sitzt, so daß in Verbindung mit der schrägen Ausgestaltung der benachbarten Bodenteile und der gegenüberliegenden Rückwand eine günstige Einsichtmöglichkeit besteht.

Eine besonders vorteilhafte Ausgestaltung besteht darin, daß der Wasserablaufstutzen mit einer als Hutmutter ausgebildeten Verschlußkappe verschlossen ist, die mit einer Dichtfläche am Wasserablaufstutzen abgedichtet und mit außerhalb der Dichtfläche angeordneten Durchbrechungen versehen ist, durch die nach Lösen der Dichtfläche von dem Wasserablaufstutzen das Wasser austritt. Wenn in Weiterbildung dieser Ausgestaltung die Verschlußkappe an der Innenseite des eben ausgebildeten Abschlußteils eine Dichtung trägt, die an der Stirnfläche des Wasserablaufstutzens zur Anlage bringbar ist und wenn die Durchbrechungen in dem das Gewinde aufweisenden Umfangsteil der Hutmutter vorgesehen sind, so wird durch diese Ausgestaltung der Verschlußkappe die Betriebssicherheit wesentlich erhöht, weil im Gegensatz zu den üblichen geschlossenen Hutmuttern nicht die gesamte Verschlußkappe abgeschraubt werden muß, um Wasser austreten zu lassen. Bei den insgesamt geschlossenen Hutmuttern bzw. Verschlußkappen muß diese vollständig heruntergeschraubt werden, wodurch das Wasser schwallartig austritt. Bei der Ausgestaltung nach der Erfindung wird bereits nach einem geringfügigen Lösen der Verschlußkappe die Dichtfläche von der Stirnfläche des Wasserablaufstutzens frei kommen, wodurch Wasser in dosierbarer Weise abgelassen werden kann. Je nach dem, wie weit die Verschlußkappe aufgeschraubt wird, wird mehr oder weniger Wasser austreten. Dies ist insbesondere dann wichtig, wenn das Wasser heiß oder mit aggressiven Zusätzen versetzt ist, falls diese wider Erwarten einmal eingesetzt werden müßten. Da bei dieser Ausgestaltung konische Dichtflächen vermieden werden können, weil mit dem ebenen Abschlußteil der Verschlußkappe an der Stirnfläche des Wasserablaufstutzens abgedichtet werden kann, wird die Gefahr, daß das Verschlußorgan durch Ablagerungen festsitzt, vermieden, wie dies bei den bisher üblichen Absperrventilen eintreten kann.

Die Erfindung ist in der Zeichnung beispielsweise dargestellt. In dieser zeigt

Fig. 1 eine Vorderansicht des Gerätes bei abgenommener Frontverkleidung und Tür;

Fig. 2 eine Rückansicht der Vorrichtung bei abgenommener Rückwandverkleidung; und

Fig. 3 einen Teilschnitt nach der Linie III-III in Fig. 1 in vergrößertem Maßstab.

Die Vorrichtung zur Wärmebehandlung von Nahrungsmitteln stellt ein Gerät dar, das ein Gehäuse 1 umfaßt, welches außer der üblichen und nicht dargestellten Frontverkleidung und Tür eine Trennwand 2 aufweist, die das Gehäuse in zwei dicht voneinander getrennte Räume unterteilt. In dem einen Raum des Gehäuses ist durch eine weitere Trennwand 3 ein Druckraum 4 von einem Garraum 5 abgetrennt, wobei der Druckraum 4 über Schlitze 6 und 7 mit dem Garraum verbunden ist. Der Boden des Garraumes ist mit 8 bezeichnet und mündet in einen Auslauf 9 aus dem Fett, Reinigungsflüssigkeiten usw. aus dem Garraum in eine Abwasserleitung gelangen, die bauseits fest installiert ist. In dem Druckraum 4 ist ein Gebläse 10 vorgesehen, das von einer Heizung 11 für die Aufheizung der Umluft vorgesehen ist, die durch eine Öffnung 12 in der Trennwand 3 aus dem Garraum 5 eingesaugt und über die Schlitze 6 und 7 in den Garraum nach Aufheizung hineingedrückt wird. In diesem Druckraum

mündet ein Dampfeinlaßstutzen 13 eines Dampferzeugers 14, der sich außerhalb der Rückwand 15 des Gerätes befindet. In dem rechts von der Trennwand 2 befindlichen Räume des Gerätes, der mit 16 bezeichnet ist, ist ein Motor 17 für das Gebläse 10 und sämtliche Steuerelemente untergebracht, die insgesamt mit 18 bezeichnet sind und zur Steuerung der Heizung 11, der Heizung 19 des Dampferzeugers 14 sowie sonstiger zum Betrieb des Gerätes notwendiger Elemente dienen. Der Motor 17 und die Steuerelemente 18 befinden sich also an der einen Seite des Gerätes, während der Dampferzeuger 14 an der Rückseite des Gerätes angeordnet ist. Hierdurch ist es möglich, diesen Dampferzeuger 14 so hoch anzubringen, daß sein Wasserablaßstutzen 20 oberhalb des Garraumbodens 8 zu liegen kommt, wodurch eine den Wasserablaßstutzen 20 verschließende Verschlußkappe 21 leicht zugänglich innerhalb des Garraumes 5 angeordnet ist. Mit 22 ist ein Wasserzuführstutzen für den Dampferzeuger 14 bezeichnet.

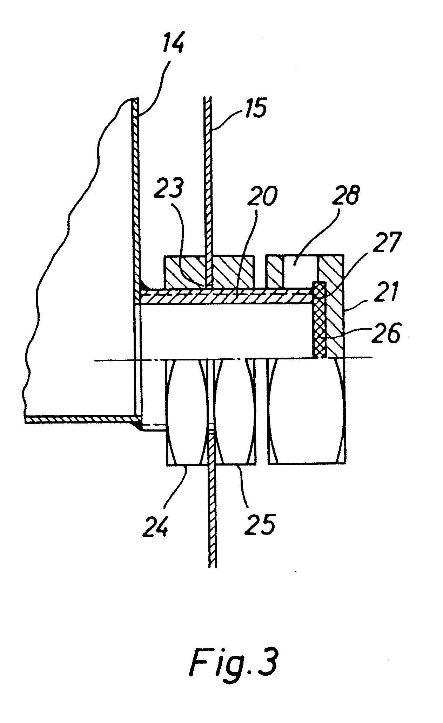

Die Befestigung des Dampferzeugers 14 an der Rückwand 15 des Gehäuses 1 ergibt sich aus der vergrößerten Darstellung in Fig. 3. Danach ist der am Dampferzeuger 14 an seiner tiefsten Stelle eingesetzte Wasserablaßstutzen 20 durch eine Bohrung 23 in der Wand 15 hindurchgeführt und beidseitig mittels Muttern 24 und 25 verschraubt. Die zum Verschließen des Wasserablaufstutzens 20 dienende Verschlußkappe 21 weist an ihrer Innenseite eine Silikondichtung 26 auf, die sich bei angezogener Verschlußkappe 21 an der Stirnfläche 27 des Wasserablaufstutzens 20 anlegt. Am Umfangsteil der Verschlußkappe 21 sind beispielsweise drei Bohrungen 28 vorgesehen, über die Wasser ablaufen kann, wenn die Verschlußkappe etwas aufgedreht wird, so daß zwischen der Dichtung 26 und der Stirnfläche 27 ein Spalt entsteht. Hieraus ist ersichtlich, daß das Ablassen von Wasser fein dosiert werden kann. In gleicher Weise ist der Dampfeinlaßstutzen 13 mit der Rückwand 15 des Gehäuses 1 verbunden. Hier fehlt jedoch die Verschlußkappe 21, da der Dampf in den Druckraum 4 eintreten soll.

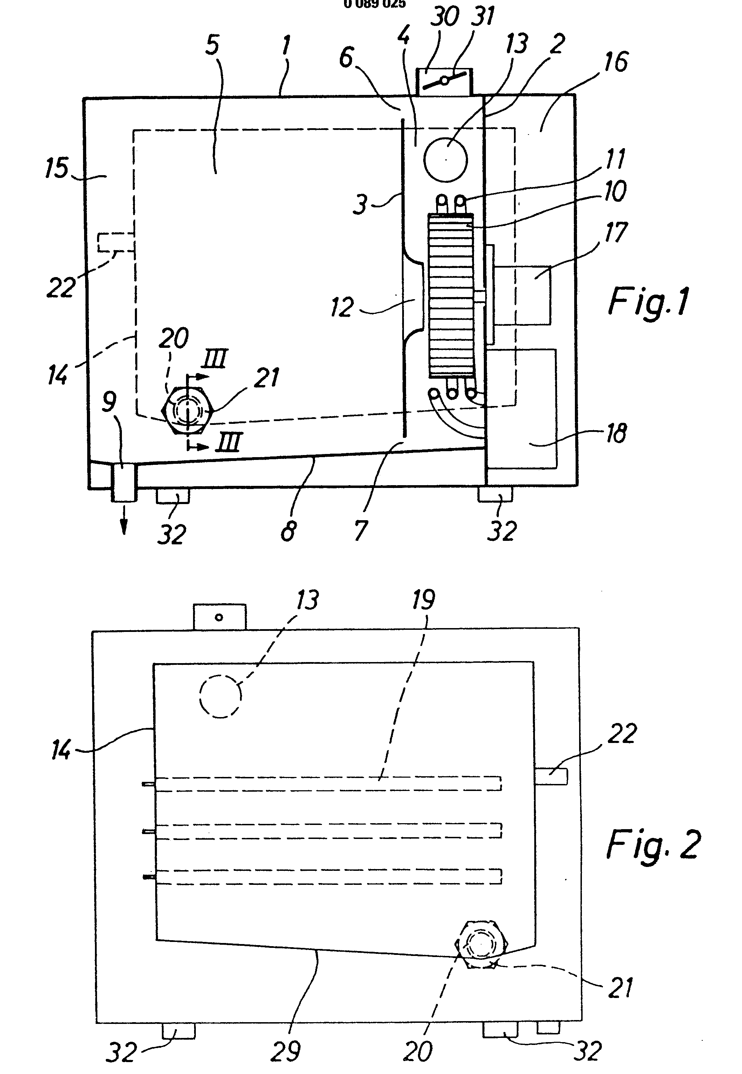

Wie aus den Fig. 1 und 2 ersichtlich, ist der Boden 29 des Dampferzeugers 14 von beiden Seiten in Richtung auf den Wasserablaßstutzen 20 geneigt ausgeführt, so daß der Wasserablaßstutzen 20 an der tiefsten Stelle vorgesehen ist. Bei abgeschraubter Verschlußkappe 21 kann man deshalb in den Dampferzeuger 14 zumindest den unteren Bereich einsehen, so daß erkennbar ist, ob sich Ablagerungen im Dampferzeuger befinden.

Der Dampfeinlaßstutzen 13 und der Wasserablaßstutzen 20 befinden sich zu beiden Seiten der in vertikaler Richtung verlaufenden Hauptachse des Dampferzeugers, d. h. sie befinden sich im wesentlichen in der Nähe von einander diagonal gegenüberliegenden Ecken. Hierdurch sind zusätzliche Befestigungslaschen nicht notwendig.

Mit 30 ist ein Wrasenabzug bezeichnet, in welchem eine Steuerklappe 31 vorgesehen ist. Mit dem Bezugszeichen 32 sind Füße des Gerätes bezeichnet.

Nicht dargestellt sind Roste im Garraum, auf denen die Nahrungsmittel zur Wärmebehandlung ausgelegt sind.

## Patentansprüche

1. Vorrichtung zur Wärmebehandlung von Nahrungsmitteln mittels eines bei atmosphärischen Druck durch ein Gebläse in einem Garraum eines Gehäuses umgewälzten Dampf-Luftgemisches als Wärmeträger, wobei in den Garraum ein Dampfeinlaß einmündet und das Gehäuse außer dem Gebläse und einem dazugehörigen Motor eine Heizvorrichtung für den Wärmeträger, einen Wrasenabzug, einen Dampferzeuger mit Wasserzulauf, Wasserablauf und steuerbarer Heizung sowie elektrische bzw. elektronische Steuerelemente für alle mit dem Betrieb der Vorrichtung zusammenhängenden steuerbaren Einflußgrößen aufweist, dadurch gekennzeichnet, daß der Wasserablauf (20) des Dampferzeugers (14) in den Garraum (5) über dessen Boden (8) einmündet.

2. Vorrichtung nach Anspruch 1, dadurch gekennzeichnet, daß der Motor (17) mit Gebläse (10) zusammen mit den Steuerelementen (18) an einer Gehäuseseite und der Dampferzeuger (14) an einer anderen Gehäuseseite angeordnet ist.

3. Vorrichtung nach Anspruch 1 oder 2, dadurch gekennzeichnet, daß der Wasserablauf (20) und der Dampfeinlaß (13) als Rohrstutzen mit Außengewinde ausgebildet und an einer Seite des Dampferzeugers (14) angeordnet sind und daß der Wasserablaufstutzen (20) und Dampfeinlaßstutzen (13) durch eine Begrenzungswand (15) des Garraumes (5) hindurchgeführt und an dieser Wand lösbar befestigt sind.

4. Vorrichtung nach Anspruch 3, dadurch gekennzeichnet, daß der Wasserablaufstutzen (20) und der Dampfeinlaßstutzen (13) an verschiedenen Seiten der vertikalen Hauptachse des Dampferzeugers (14) angeordnet sind.

5. Vorrichtung nach einem der Ansprüche 1 bis 4, dadurch gekennzeichnet, daß sämtliche Wand- bzw. Bodenteile des Dampferzeugers (14) mit Ausnahme der den Wasserablaufstutzen (20) tragenden Wand zumindest in der Nähe des Wasserablaufstutzens in Richtung auf diesen hin geneigt sind.

6. Vorrichtung nach einem der Ansprüche 1 bis 5, dadurch gekennzeichnet, daß der Wasserablaufstutzen (20) mit einer als Hutmutter ausgebildeten Verschlußkappe (21) verschlossen ist, die mit einer Dichtfläche (26) am Wasserablaufstutzen (20) abdichtet und mit außerhalb der Dichtfläche angeordneten Durchbrechungen (28) versehen ist, durch die nach Lösen der Dichtfläche von dem Wasserablaufstutzen (20) das Wasser austritt.

7. Vorrichtung nach Anspruch 6, dadurch gekennzeichnet, daß die Verschlußkappe (21) an der Innenseite des eben ausgebildeten Abschlußteils eine Dichtung (26) trägt, die an der Stirnfläche (27) des Wasserablaufstutzens (20) zur Anlage bringbar ist und daß die Durchbrechungen (28) in dem das Gewinde aufweisenden Umfangsteil der Verschlußkappe (21) vorgesehen sind.

## Claims

1. Apparatus for heat-treating foodstuffs by a heat transfer medium consisting of a steam-air mixture which is circulated under atmospheric pressure by a blower in a cooking space of a housing, wherein a steam inlet opens into the cooking space and the housing comprises, in addition to the blower and an associated motor, also a heater for the heat transfer medium, a vapours outlet, a steam generator with water inlet, a water drain and a controllable heater, and electrical and/or electronic control elements for all controllable variables related to the operation of the apparatus, characterized in that the water drain (20) of the steam generator (14) opens into the cooking space (5) above the bottom (8) thereof.

2. Apparatus according to claim 1, characterized in that the motor (17) with the blower (10) as well as the control elements (18) are provided on another side of the housing.

3. Apparatus according to claim 1 or 2, characterized in that the water drain (20) and the steam inlet (13) consist of connecting pipes having external screw threads and are provided on one side of the steam generator (14) and that the water drain pipe (20) and the steam inlet pipe (13) extend through a boundary wall (15) of the cooking space (5) and are detachably secured to that wall.

4. Apparatus according to claim 3, characterized in that the water drain pipe (20) and the steam inlet pipe (13) are provided on different sides of the vertical main axis of the steam generator (14).

5. Apparatus according to any of claims 1 to 4, characterized in that all wall and bottom parts of the steam generator (14), with the exception of the wall which carries the water drain pipe (20), are inclined toward the water drain pipe at least close to the latter.

6. Apparatus according to any of claims 1 to 5, characterized in that the water drain pipe (20) is closed by a closing cap (21), which constitutes a cap nut and has a sealing surface (26) sealing at the water drain pipe (20) and is provided outside the sealing surface with apertures (28) through which the water emerges when the sealing surface has been separated from the water drain pipe (20).

7. Apparatus according to claim 6, characterized in that the closing cap (21) carries on the inside of the planar closing portion a seal (26), which is engageable with the end face (27) of the water drain pipe (20), and that the apertures (28) are provided in the screw-threaded skirt of the closing cap (21).

## Revendications

1. Appareil pour traiter thermiquement des aliments au moyen d'un mélange air-vapeur faisant office d'agent caloporteur brassé sous la pression atmosphérique, par une soufflerie, dans une chambre de cuisson d'un boîtier, une admission de vapeur débouchant dans la chambre de cuisson et le boîtier présentant, outre la soufflerie et un moteur associé, un dispositif de chauffage de l'agent caloporteur, une évacuation des buées, un générateur de vapeur muni d'une admission d'eau, d'une évacuation d'eau et d'un chauffage commandable, ainsi que des éléments électriques ou électroniques de commande de toutes les grandeurs d'influence qui peuvent être commandées et sont associées au fonctionnement de l'appareil, caractérisé par le fait que l'évacuation d'eau (20) du générateur de vapeur (14) débouche dans la chambre de cuisson (5) au dessus du fond (8) de cette dernière.

2. Appareil selon la revendication 1, caractérisé par le fait que le moteur (17) avec la soufflerie (10) sont disposés conjointement aux éléments de commande (18) d'un côté du boîtier, le générateur de vapeur (14) étant situé d'un autre côté de ce boîtier.

3. Appareil selon la revendication 1 ou 2, caractérisé par le fait que l'évacuation d'eau (20) et l'admission de vapeur (13) sont réalisées comme raccords tubulaires à filetage externe et sont disposées d'un côté du générateur de vapeur (14); et par le fait que le raccord (20) d'évacuation d'eau et le raccord (13) d'admission de vapeur traversent une paroi de délimitation (15) de la chambre de cuisson (5) et sont fixés amoviblement à cette paroi.

4. Appareil selon la revendication 3, caractérisé par le fait que le raccord (20) d'évacuation d'eau et le raccord (13) d'admission de vapeur sont disposés sur de côtés différents de l'axe principal vertical du générateur de vapeur (14).

5. Appareil selon l'une des revendications 1 à 4, caractérisé par le fait que toutes les parties de la paroi et du fond du générateur de vapeur (14), à l'exception de la paroi portant le raccord (20) d'évacuation d'eau, sont inclinées en direction du raccord d'évacuation d'eau, au moins à proximité de ce dernier.

6. Appareil selon l'une des revendications 1 à 5, caractérisé par le fait que le raccord (20) d'évacuation d'eau est obturé par un capuchon d'obturation (21) qui est réalisé sous la forme d'un capuchon taraudé, assure l'étanchéité du raccord (20) d'évacuation d'eau par une surface d'étanchement (26) et est percé d'évidements (28) situés à l'extérieur de la surface d'étanchement et par lesquels l'eau sort après que la surface d'étanchement a été dissociée du raccord (20) d'évacuation d'eau.

7. Appareil selon la revendication 6, caractérisé par le fait que le capuchon d'obturation (21) porte, à la face interne de la partie d'extrémité de réalisation plane, une garniture d'étanchéité (26) pouvant être amenée au contact de la face frontale (27) du raccord (20) d'évacuation d'eau; et par le fait que les évidements (28) sont prévus dans la partie périphérique du capuchon d'obturation (21) présentant le filetage.

0 089 025

Fig. 1

Fig. 2

Fig.3